# FASCICULE DE BREVET EUROPEEN

(11) **EP 4 115 730 B1**
(45) Date de publication et mention de la délivrance du brevet: **03.12.2025**
(21) Numéro de dépôt: 22183595.2
(22) Date de dépôt: 07.07.2022
(51) Int. Cl.: A01K 1/00

(54) **SÉPARATEUR POUR MARCHE D' ALIMENTATION DANS UN BÂTIMENT D' ÉLEVAGE**
TRENNWAND FÜR FUTTERGANG IN EINEM TIERHALTUNGSGEBÄUDE
SEPARATOR FOR FEEDING STEP IN A LIVESTOCK BUILDING

(30) Priorité: 08.07.2021 FR 2107404
(43) Date de publication de la demande: 11.01.2023
(73) Titulaire: Group Elastoteck, 44390 Nort sur Erdre (FR)
(72) Inventeur: BIORET, Jean-Vincent, 44390 PETIT MARS (FR)
(74) Mandataire: Jacobacci Coralis Harle

(56) Documents cités:
- WO-A1-2020/225290
- DE-A1- 102006 007 091
- GB-A- 2 471 707
- US-A- 3 734 059

## Description

### Domaine technique de l'invention

La présente invention concerne le domaine technique des séparateurs pour marche d'alimentation dans un bâtiment d'élevage, destinés à être solidarisés avec une barrière à cornadis.

### Etat de la technique

Dans un bâtiment d'élevage, la marche d'alimentation est classiquement équipée d'une barrière à cornadis.

Cette barrière à cornadis se compose d'une succession d'ouvertures délimitées, chacune, par un montant vertical réunissant deux barres horizontales (respectivement supérieur et inférieur), et par un bras oscillant.

Le bras oscillant est destiné à être verrouillé, généralement dans une position verticale, pour empêcher l'accès à l'auge ou pour maintenir l'animal et permettre son alimentation ou son examen.

Mais, en pratique, un tel espace d'alimentation n'est généralement pas optimal pour le bien-être animal.

En effet, les animaux sont habituellement motivés à s'alimenter en même temps. Si les animaux manquent d'espace, une compétition s'installe et ceci peut compromettre la santé et le bien-être des individus.

Les séparateurs de cornadis sont alors utiles pour délimiter la place disponible pour chaque animal, ce qui diminue la pression des animaux dominants à l'auge.

Le document US3734059A divulgue de tels séparateurs de cornadis pour marche d'alimentation dans un bâtiment d'élevage.

Toutefois, en pratique, l'agencement de ces séparateurs de cornadis n'est pas toujours optimal, avec des risques de blessures pour les animaux.

### Présentation de l'invention

Afin de remédier à l'inconvénient précité de l'état de la technique, la présente invention propose un séparateur pour marche d'alimentation dans un bâtiment d'élevage, destiné à être solidarisé avec une barrière à cornadis comprenant deux barres longitudinales reliées par des couples de montants, l'un des montants desdits couples de montant étant avantageusement équipé d'une barre de contention oscillante.

Le séparateur comprend conformément à la revendication 1 un organe tubulaire comportant deux extrémités et équipé de moyens de solidarisation à ladite barrière de cornadis, à savoir :
- des premiers moyens de solidarisation adaptés à être solidarisés avec un montant de ladite barrière à cornadis, et
- des seconds moyens de solidarisation adaptés à être solidarisés avec une barre longitudinale de ladite barrière à cornadis,

les deux extrémités étant munies desdits moyens de solidarisation, à savoir une première extrémité munie desdits premiers moyens de solidarisation adaptés à être solidarisés avec un montant de ladite barrière à cornadis, et une seconde extrémité munie desdits seconds moyens de solidarisation adaptés à être solidarisés avec une barre longitudinale de ladite barrière à cornadis,
les seconds moyens de solidarisation comprennant deux zones de solidarisation, adaptées à être solidarisées avec ladite barre longitudinale de la barrière à cornadis, de part et d'autre d'un montant.

Un tel séparateur a notamment l'intérêt de pouvoir être monté sur une barrière à cornadis déjà en place.

D'autres caractéristiques non limitatives et avantageuses du produit conforme à l'invention, prises individuellement ou selon toutes les combinaisons techniquement possibles, sont les suivantes :
- les premiers moyens de solidarisation consistent en un collier de fixation ;
- les deux zones de solidarisation sont avantageusement amovibles ; les seconds moyens de solidarisation comprennent deux brides adaptées à être positionnées autour de la barre longitudinale de la barrière à cornadis, de part et d'autre du montant ;
- l'organe tubulaire consiste en un tube, réalisé en métal ou en plastique, dont le diamètre est de 20 à 80 mm, de préférence de 42 à 62 mm ;
- les extrémités dudit organe tubulaire définissent un axe de fixation, et lequel séparateur comporte deux portions convexes reliées par une portion concave, à savoir une portion convexe inférieure, s'étendant avantageusement entre les extrémités dudit organe tubulaire, dont la cote en longueur est de 1100 à 1400 mm par rapport à l'axe de fixation, et une portion convexe supérieure, en saillie par rapport aux extrémités dudit organe tubulaire, définissant un angle de 40° à 50° par rapport à l'axe de fixation, dont la cote en longueur par rapport à l'axe de fixation est inférieure par rapport à la cote en longueur de ladite portion convexe inférieure ; la portion convexe supérieure, en forme générale de U, comporte deux bras latéraux reliés par un bras de jonction adapté à recevoir une barre longitudinale rapportée.

La présente invention concerne également le système de séparation, pour marche d'alimentation dans un bâtiment d'élevage, destiné à être solidarisé avec une barrière à cornadis comprenant deux barres longitudinales reliées par des couples de montants, l'un des montants desdits montants étant avantageusement équipé d'une barre de contention oscillante.

Le système de séparation comprend conformément à la revendication 8 :
- plusieurs séparateurs selon l'invention,
   et éventuellement
- une barre longitudinale rapportée, destinée à être solidarisée avec lesdits séparateurs juxtaposés, et/ou
- des moyens de pulvérisation, pour le rafraichissement des animaux, avantageusement portés par ladite barre longitudinale rapportée.

La présente invention concerne encore une barrière à cornadis comprenant conformément à la revendication 9 deux barres longitudinales reliées par des couples de montants, l'un des montants desdits couples étant avantageusement équipé d'une barre de contention oscillante.

La barrière à cornadis est équipée d'un système de séparation selon l'invention.

Et les séparateurs sont avantageusement montés sur les montants équipés de la barre de contention oscillante.

De préférence, les premiers moyens de solidarisation, avec un montant de ladite barrière à cornadis, se situent en haut ; et les seconds moyens de solidarisation, avec une barre longitudinale de la barrière à cornadis, se situent en bas.

De manière alternative, les premiers moyens de solidarisation, avec un montant de ladite barrière à cornadis, se situent en bas ; et les seconds moyens de solidarisation, avec une barre longitudinale de la barrière à cornadis, se situent en haut.

La présente invention concerne encore, conformément à la revendication 11, le bâtiment d'élevage équipé d'une barrière à cornadis selon l'invention.

La barre longitudinale rapportée se situe avantageusement à une hauteur allant de 1600 à 2000 mm par rapport au sol.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective d'une barrière à cornadis qui est équipée d'un séparateur selon l'invention ;
[Fig. 2] est une vue de côté qui illustre la barrière à cornadis équipée du séparateur selon l'invention, conforme à la figure 1 ;
[Fig. 3] est une vue partielle et agrandie de la barrière à cornadis équipée du séparateur selon l'invention, montrant plus en détails les seconds moyens de solidarisation adaptés à être solidarisés avec une barre longitudinale de cette barrière à cornadis.

Il est à noter que, sur ces figures, les éléments structurels et/ou fonctionnels communs aux différentes variantes peuvent présenter les mêmes références.

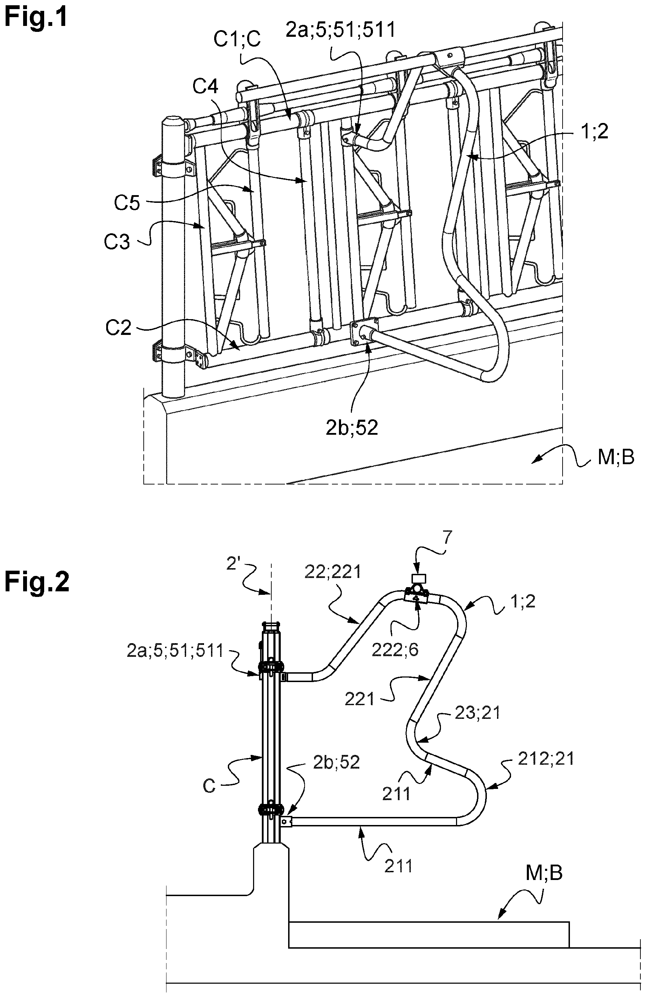

La présente invention, illustrée au travers des figures 1 à 3, concerne un séparateur 1 pour marche d'alimentation M dans un bâtiment d'élevage B.

Un tel séparateur 1, dit encore « séparateur de cornadis », est en particulier utile pour délimiter la place disponible pour chaque animal (par exemple des bovins, et en particulier des vaches laitières) au sein de cette marche d'alimentation M.

A cet effet, le séparateur 1 est destiné à être solidarisé avec une barrière à cornadis C, avantageusement classique en soi.

De manière générale, une telle barrière à cornadis C comprend deux barres longitudinales C1, C2 (l'une inférieure C2 et l'autre supérieure C1), horizontales, reliées par des montants C3, C4, verticaux.

Des couples de montants C3, C4 délimitent, avec les deux barres longitudinales C1, C2, une ouverture adaptée au passage de la tête d'un animal.

Pour assurer la contention, un premier montant C3 de chaque couple de montants C3, C4 est équipé d'une barre de contention oscillante C5.

La barre de contention oscillante C5, en regard du second montant C4, est avantageusement mobile entre deux positions de fin de course :
- une position « libre », avantageusement inclinée, pour autoriser le passage de la tête de l'animal dans les deux sens, et
- une position « contention », avantageusement verticale et parallèle au second montant C4, empêchant le passage de la tête de l'animal dans les deux sens.

De manière générale, le séparateur 1 selon l'invention a l'intérêt d'être destiné à être solidarisé, d'une part, avec un montant C3, C4 de la barrière à cornadis C et, d'autre part, avec une barre longitudinale C1, C2 de ladite barrière à cornadis C.

A cet effet, le séparateur 1 comprend un organe tubulaire 2, avantageusement de forme générale cintrée.

L'organe tubulaire 2 consiste avantageusement en un tube, réalisé en métal ou en plastique, avantageusement conformé par cintrage, dont le diamètre est par exemple de 20 à 80 mm, de préférence de 42 à 62 mm.

Selon l'invention, l'organe tubulaire 2 est équipé de moyens de solidarisation 5 pour sa solidarisation à la barrière à cornadis C, à savoir :
- des premiers moyens de solidarisation 51 adaptés à être solidarisés avec un montant C3, C4 de la barrière à cornadis C, et
- des seconds moyens de solidarisation 52 adaptés à être solidarisés avec une barre longitudinale C1, C2 de ladite barrière à cornadis C.

De manière générale, les moyens de solidarisation 5 (plus précisément les premiers moyens de solidarisation 51 et les seconds moyens de solidarisation 52) consistent avantageusement en des moyens de solidarisation amovible, adaptés à une solidarisation amovible dudit organe tubulaire 2 avec ladite barrière à cornadis C.

En l'espèce, l'organe tubulaire 2, avantageusement de forme générale cintrée, comporte deux extrémités 2a, 2b.

Les extrémités 2a, 2b de l'organe tubulaire 2 définissent avantageusement un axe de fixation 2' (figure 2).

L'écartement entre les deux extrémités 2a, 2b est par exemple de 500 à 1 000 mm.

Et ces deux extrémités 2a, 2b de l'organe tubulaire 2 sont munies des moyens de solidarisation 5 précités, à savoir :
- une première extrémité 2a munie des premiers moyens de solidarisation 51 adaptés à être solidarisés avec un montant C3, C4 de la barrière à cornadis C, et
- une seconde extrémité 2b munie des seconds moyens de solidarisation 52 adaptés à être solidarisés avec une barre longitudinale C1, C2 de la barrière à cornadis C.

De préférence, les premiers moyens de solidarisation 51 consistent en un collier de fixation qui est rapporté au niveau de la première extrémité 2a.

Ce collier de fixation 51 est ainsi adapté à envelopper et à serrer un montant C3, C4 (avantageusement vertical) de la barrière à cornadis C.

L'axe central de ce collier de fixation 51 est avantageusement parallèle à l'axe de fixation 2' précité.

Ce collier de fixation 51 est avantageusement rapporté, par emmanchement, sur la première extrémité 2a.

Pour cela, ce collier de fixation 51 comporte avantageusement un manchon 511, femelle, emmanché et fixé sur la première extrémité 2a de l'organe tubulaire 2.

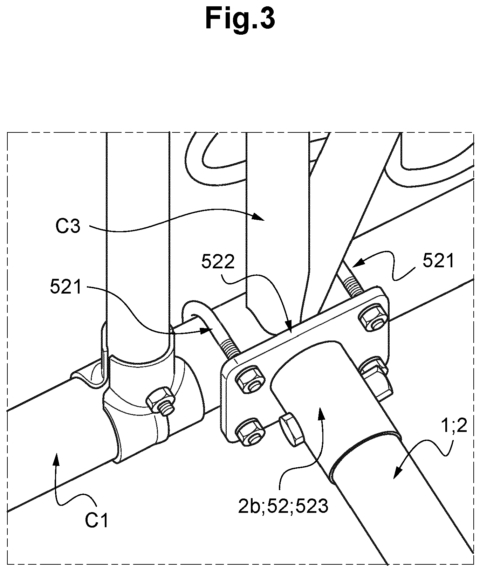

Par ailleurs, une forme de réalisation des seconds moyens de solidarisation 52 est illustrée sur la figure 3.

Les seconds moyens de solidarisation 52 comprennent deux zones de solidarisation 521, avantageusement deux zones de solidarisation 521 amovibles, adaptées à être solidarisées avec la barre longitudinale C1 de la barrière à cornadis C, de part et d'autre d'un montant C3.

De préférence, les seconds moyens de solidarisation 52 comprennent deux brides 521, chacune avantageusement en forme générale de U, adaptées à être positionnées autour de la barre longitudinale C1 de la barrière à cornadis C, de part et d'autre du montant C3.

Ces brides 521 sont avantageusement assemblées avec une platine 522, du côté d'une face avant destinée à prendre appui sur la barre horizontale C1.

La platine 522 est munie avantageusement d'un manchon 523, du côté de sa face arrière, qui s'emmanche et se fixe avec la seconde extrémité 2b de l'organe tubulaire 2.

L'axe central de ces seconds moyens de solidarisation 52 est avantageusement perpendiculaire à l'axe de fixation 2' précité.

De manière générale, l'organe tubulaire 2 présente avantageusement une forme particulière décrite ci-dessous en relation avec la figure 2.

En effet, l'organe tubulaire 2 comporte avantageusement deux portions convexes 21, 22 reliées par une portion concave 23.

Une portion convexe inférieure 21 s'étend avantageusement entre les extrémités 2a, 2b de l'organe tubulaire 2. En d'autres termes, cette portion convexe inférieure 21 s'étend dans l'encombrement défini par deux plans perpendiculaires à l'axe de fixation 2' et passant par les deux extrémités 2a, 2b.

En particulier, cette portion convexe inférieure 21 comporte ici deux bras latéraux 211 reliés par un bras de jonction 212.

Un bras latéral 211, terminé par l'extrémité 2a, s'étend ici perpendiculairement à l'axe de fixation 2'.

La cote en longueur de cette portion convexe inférieure 21 (correspondant à la distance entre l'axe de fixation 2' et le bras de jonction 212) est de 1100 à 1400 mm par rapport à l'axe de fixation 2'.

Une portion convexe supérieure 22 est en saillie par rapport aux extrémités 2a, 2b de cet organe tubulaire 2. En d'autres termes, cette portion convexe supérieure 22 s'étend en dehors de l'encombrement défini par deux plans perpendiculaires à l'axe de fixation 2' et passant par les deux extrémités 2a, 2b.

De préférence, la portion convexe supérieure 22, en forme générale de U, comporte deux bras latéraux 221 reliés par un bras de jonction 222.

Cette portion convexe supérieure 22 définit un angle de 40° à 50° par rapport à l'axe de fixation 2'. Cet angle est avantageusement défini par une bissectrice passant entre les deux bras latéraux 221.

Et la cote en longueur de cette portion convexe supérieure 22 (correspondant à la distance entre l'axe de fixation 2' et le bras de jonction 222) est avantageusement inférieure par rapport à la cote en longueur de la portion convexe inférieure 21.

De préférence, le bras de jonction 222 est adapté à recevoir une barre longitudinale rapportée 6 décrite par la suite.

Une telle barre longitudinale rapportée 6 s'étend avantageusement parallèlement aux barres longitudinales C1, C2 de la barrière à cornadis C, de préférence au-dessus de la barre longitudinale supérieure C1.

De manière générale, la présente invention concerne également le système de séparation, pour marche d'alimentation dans un bâtiment d'élevage, destiné à être solidarisé avec la barrière à cornadis C.

Le système de séparation comprend :
- plusieurs séparateurs 1 selon l'invention,
   et éventuellement
- la barre longitudinale rapportée 6, destinée à être solidarisée avec les séparateurs 1 juxtaposés (de préférence en bataille), et/ou
- des moyens de pulvérisation 7 (par exemple des buses connectées à un circuit d'alimentation hydrique), pour le rafraichissement des animaux, qui sont avantageusement portés par la barre longitudinale rapportée 6.

La présente invention concerne également la barrière à cornadis C équipée du système de séparation selon l'invention.

En ce sens, les séparateurs 1 sont avantageusement montés sur la barrière à cornadis C, répartis en bataille et perpendiculairement au plan général de cette barrière à cornadis C.

De préférence, les séparateurs 1 sont montés sur les montants C3 équipés de la barre de contention oscillante C5.

Selon le mode de réalisation illustré sur les figures 1 à 3, les premiers moyens de solidarisation 51, avec le montant C3 de ladite barrière à cornadis C, se situent en haut (entre les deux barre longitudinale C1, C2 de ladite barrière à cornadis C).

Et les seconds moyens de solidarisation 52, avec une barre longitudinale C2 de la barrière à cornadis C, se situent en bas. Les seconds moyens de solidarisation 52 sont ainsi assemblés avec la barre longitudinale C2 inférieure.

Selon une alternative de réalisation, non représentée, les premiers moyens de solidarisation 51, avec un montant de ladite barrière à cornadis C, se situent en bas.

Et les seconds moyens de solidarisation 52, avec une barre longitudinale C1 de la barrière à cornadis C, se situent en haut. Les seconds moyens de solidarisation 52 sont ainsi assemblés avec la barre longitudinale C1 supérieure.

Dans cette alternative de réalisation, l'organe tubulaire 2 est avantageusement conformé pour préserver les deux portions convexes 21, 22 reliées par une portion concave 23, tel qu'illustré sur les figures 1 et 2.

De manière générale, dans le bâtiment d'élevage, la barre longitudinale rapportée 6 se situe avantageusement à une hauteur allant de 1600 à 2000 mm par rapport au sol.

Bien entendu, diverses autres modifications peuvent être apportées à l'invention dans le cadre des revendications annexées.

## Revendications

1. Séparateur pour marche d'alimentation dans un bâtiment d'élevage, destiné à être solidarisé avec une barrière à cornadis (C) comprenant deux barres longitudinales (C1, C2) reliées par des couples de montants (C3, C4),
lequel séparateur (1) comprend un organe tubulaire (2) comportant deux extrémités (2a, 2b) et équipé de moyens de solidarisation (5) à ladite barrière à cornadis (C), à savoir :
- des premiers moyens de solidarisation (51) adaptés à être solidarisés avec un montant (C3, C4) de ladite barrière à cornadis (C), et
- des seconds moyens de solidarisation (52) adaptés à être solidarisés avec une barre longitudinale (C1, C2) de ladite barrière à cornadis (C),
les deux extrémités (2a, 2b) étant munies desdits moyens de solidarisation (5), à savoir :
- une première extrémité (2a) munie desdits premiers moyens de solidarisation (51) adaptés à être solidarisés avec un montant (C3, C4) de ladite barrière à cornadis (C), et
- une seconde extrémité (2b) munie desdits seconds moyens de solidarisation (52) adaptés à être solidarisés avec une barre longitudinale (C1, C2) de ladite barrière à cornadis (C),
lequel séparateur (1) étant **caractérisé en ce que** les seconds moyens de solidarisation (52) comprennent deux zones de solidarisation (521) adaptées à être solidarisées avec ladite barre longitudinale (C1, C2) de la barrière à cornadis (C), de part et d'autre d'un montant (C3, C4).

2. Séparateur selon la revendication 1, **caractérisé en ce que** les seconds moyens de solidarisation (52) comprennent deux brides (521) adaptées à être positionnées autour de la barre longitudinale (C1, C2) de la barrière à cornadis (C), de part et d'autre du montant (C3, C4).

3. Séparateur selon l'une quelconque des revendications 1 ou 2, **caractérisé en ce que** les premiers moyens de solidarisation (51) consistent en un collier de fixation.

4. Séparateur selon l'une quelconque des revendications 1 à 3, **caractérisé en ce que** lesdites deux zones de solidarisation (521) consistent en deux zones de solidarisation (521) amovibles.

5. Séparateur selon l'une quelconque des revendications 1 à 4, **caractérisé en ce que** l'organe tubulaire (2) consiste en un tube, réalisé en métal ou en plastique, dont le diamètre est de 20 à 80 mm, de préférence de 42 à 62 mm.

6. Séparateur selon l'une quelconque des revendications 1 à 5, **caractérisé en ce que** les extrémités (2a, 2b) dudit organe tubulaire (2) définissent un axe de fixation (2'), et
lequel séparateur (1) comporte deux portions convexes (21, 22) reliées par une portion concave (23), à savoir :
- une portion convexe inférieure (21), s'étendant avantageusement entre les extrémités (2a, 2b) dudit organe tubulaire (2), dont la cote en longueur est de 1100 à 1400 mm par rapport à l'axe de fixation (2'), et
- une portion convexe supérieure (22), en saillie par rapport aux extrémités (2a, 2b) dudit organe tubulaire (2), définissant un angle de 40° à 50° par rapport à l'axe de fixation (2'), dont la cote en longueur par rapport à l'axe de fixation (2') est inférieure par rapport à la cote en longueur de ladite portion convexe inférieure (21).

7. Séparateur selon la revendication 6, **caractérisé en ce que** la portion convexe supérieure (22), en forme générale de U, comporte deux bras latéraux (221) reliés par un bras de jonction (222) adapté à recevoir une barre longitudinale rapportée (6).

8. Système de séparation, pour marche d'alimentation dans un bâtiment d'élevage, destiné à être solidarisé avec une barrière à cornadis (C) comprenant deux barres longitudinales (C1, C2) reliées par des couples de montants (C3, C4), l'un des montants desdits montants étant avantageusement équipé d'une barre de contention oscillante (C5),
lequel système de séparation comprend :
- plusieurs séparateurs (1) selon l'une quelconque des revendications 1 à 7,
et éventuellement
- une barre longitudinale rapportée (6), destinée à être solidarisée avec lesdits séparateurs (1) juxtaposés, et/ou
- des moyens de pulvérisation (7), pour le rafraichissement des animaux, avantageusement portés par ladite barre longitudinale rapportée (6).

9. Barrière à cornadis comprenant deux barres longitudinales (C1, C2) reliées par des couples de montants (C3, C4), l'un des montants desdits couples étant avantageusement équipé d'une barre de contention oscillante (C5),
laquelle barrière à cornadis (C) est équipée d'un système de séparation selon la revendication 8,
dont les séparateurs (1) sont avantageusement montés sur les montants (C3) équipés de la barre de contention oscillante (C5).

10. Barrière à cornadis (C), selon la revendication 9, **caractérisé en ce que** :
- les premiers moyens de solidarisation (51), avec un montant (C3, C4) de ladite barrière à cornadis (C), se situent en haut, et
- les seconds moyens de solidarisation (52), avec une barre longitudinale (C2) de la barrière à cornadis (C), se situent en bas,
ou
- les premiers moyens de solidarisation (51), avec un montant (C3, C4) de ladite barrière à cornadis (C), se situent en bas, et
- les seconds moyens de solidarisation (52), avec une barre longitudinale (C1) de la barrière à cornadis (C), se situent en haut.

11. Bâtiment d'élevage équipé d'une barrière à cornadis (C) selon l'une quelconque des revendications 9 ou 10.

## Patentansprüche

1. Trenngitter für Futtergang in einem Tierhaltungsgebäude, wobei das Gitter mit einer Freßgitterbarriere (C) fest verbunden werden soll, die zwei durch Stützenpaare (C3, C4) verbundene Längsstangen (C1, C2) aufweist,
wobei das Trenngitter (1) ein rohrförmiges Organ (2) aufweist, das zwei Enden (2a, 2b) aufweist und mit Mitteln (5) zum Befestigen an der Freßgitterbarriere (C) ausgestattet ist, und zwar mit:
- ersten Befestigungsmitteln (51), die dazu ausgelegt sind, mit einer Stütze (C3, C4) der Freßgitterbarriere (C) fest verbunden zu werden, und
- zweiten Befestigungsmitteln (52), die dazu ausgelegt sind, mit einer Längsstange (C1, C2) der Freßgitterbarriere (C) fest verbunden zu werden,
wobei die beiden Enden (2a, 2b) mit den Befestigungsmitteln (5) ausgestattet sind, und zwar:
- ein erstes Ende (2a), das mit den ersten Befestigungsmitteln (51) ausgestattet ist, die dazu ausgelegt sind, mit einer Stütze (C3, C4) der Freßgitterbarriere (C) fest verbunden zu werden, und
- ein zweites Ende (2b), das mit den zweiten Befestigungsmitteln (52) ausgestattet ist, die dazu ausgelegt sind, mit einer Längsstange (C1, C2) der Freßgitterbarriere (C) fest verbunden zu werden,
wobei das Trenngitter (1) **dadurch gekennzeichnet ist, daß** die zweiten Befestigungsmittel (52) zwei Befestigungszonen (521) aufweisen, die dazu ausgelegt sind, mit der Längsstange (C1, C2) der Freßgitterbarriere (C) beiderseits einer Stütze (C3, C4) befestigt zu werden.

2. Trenngitter gemäß Anspruch 1, **dadurch gekennzeichnet, daß** die zweiten Befestigungsmittel (52) zwei Flansche (521) aufweisen, die dazu ausgelegt sind, um die Längsstange (C1, C2) der Freßgitterbarriere (C) herum, beiderseits der Stütze (C3, C4), angeordnet zu werden.

3. Trenngitter gemäß einem der Ansprüche 1 oder 2, **dadurch gekennzeichnet, daß** die ersten Befestigungsmittel (51) aus einer Befestigungsschelle bestehen.

4. Trenngitter gemäß einem der Ansprüche 1 bis 3, **dadurch gekennzeichnet, daß** die beiden Befestigungszonen (521) aus zwei abnehmbaren Befestigungszonen (521) bestehen.

5. Trenngitter gemäß einem der Ansprüche 1 bis 4, **dadurch gekennzeichnet, daß** das rohrförmige Organ (2) aus einem aus Metall oder aus Plastik gefertigten Rohr besteht, dessen Durchmesser 20 bis 80 mm, vorzugsweise 42 bis 62 mm, beträgt.

6. Trenngitter gemäß einem der Ansprüche 1 bis 5, **dadurch gekennzeichnet, daß** die Enden (2a, 2b) des rohrförmigen Organs (2) eine Befestigungsachse (2') definieren und
das Trenngitter (1) zwei durch einen konkaven Abschnitt (23) verbundene konvexe Abschnitte (21, 22) aufweist, und zwar:
- einen unteren konvexen Abschnitt (21), der sich vorteilhafterweise zwischen den Enden (2a, 2b) des rohrförmigen Organs (2) erstreckt und dessen Länge in Bezug auf die Befestigungsachse (2') 1100 bis 1400 mm beträgt, und
- einen oberen konvexen Abschnitt (22), der gegenüber den Enden (2a,2b) des rohrförmigen Organs (2) hervorsteht und zur Befestigungsachse (2') einen Winkel von 40° bis 50° definiert und dessen Länge in Bezug auf die Befestigungsachse (2') kleiner als die Länge des konvexen unteren Abschnitts (21) ist.

7. Trenngitter gemäß Anspruch 6, **dadurch gekennzeichnet, daß** der im Wesentlichen U-förmige obere konvexe Abschnitt (22) zwei Seitenarme (221) aufweist, die durch einen Verbindungsarm (222) verbunden sind, der dazu ausgelegt ist, eine angesetzte Längsstange (6) aufzunehmen.

8. Trennsystem für Futtergang in einem Tierhaltungsgebäude, wobei das System mit einer Freßgitterbarriere (C) fest verbunden werden soll, die zwei durch Stützenpaare (C3, C4) verbundene Längsstangen (C1, C2) aufweist, wobei eine der Stützen der besagten Stützen vorteilhafterweise mit einer hin und her bewegbaren Sperrstange (C5) ausgestattet ist,
wobei das Trennsystem
- mehrere Trenngitter (1) gemäß einem der Ansprüche 1 bis 7 und eventuell
- eine angesetzte Längsstange (6), die dazu bestimmt ist, mit den nebeneinander angeordneten Trenngittern (1) fest verbunden zu werden, und/oder
- Sprühmittel (7) zum Erfrischen der Tiere, die vorteilhafterweise von der angesetzten Längsstange (6) getragen werden,
aufweist.

9. Freßgitterbarriere mit zwei durch Stützenpaare (C3, C4) verbundene Längsstangen (C1, C2), wobei eine der Stützen der besagten Paare vorteilhafterweise mit einer hin und her bewegbaren Sperrstange (C5) ausgestattet ist,
wobei die Freßgitterbarriere (C) mit einem Trennsystem gemäß Anspruch 8 ausgestattet ist,
dessen Trenngitter (1) vorteilhafterweise an den mit einer hin und her bewegbaren Sperrstange (C5) ausgestatteten Stützen (C3) angebracht sind.

10. Freßgitterbarriere (C) gemäß Anspruch 9, **dadurch gekennzeichnet, daß**
- sich die ersten Befestigungsmittel (51) mit einer Stütze (C3, C4) der Freßgitterbarriere (C) oben befinden und
- sich die zweiten Befestigungsmittel (52) mit einer Längsstange (C2) der Freßgitterbarriere (C) unten befinden,
oder daß
- sich die ersten Befestigungsmittel (51) mit einer Stütze (C3, C4) der Freßgitterbarriere (C) unten befinden und
- sich die zweiten Befestigungsmittel (52) mit einer Längsstange (C1) der Freßgitterbarriere (C) oben befinden.

11. Tierhaltungsgebäude mit einer Freßgitterbarriere (C) gemäß einem der Ansprüche 9 oder 10.

## Claims

1. Separator for feeding step in a livestock building, intended to be fixed on a headlock barrier (C) comprising two longitudinal bars (C1, C2) coupled by pairs of uprights (C3, C4),
said separator (1) comprising a tubular member (2) comprising two ends (2a, 2b) and being provided with fixing means (5) at the headlock barrier (C), namely:
- first fixing means (51) suitable for being fixed on an upright (C3, C4) of the headlock barrier (C), and
- second fixing means (52) suitable for being fixed on a longitudinal bar (C1, C2) of the headlock barrier (C),
the two ends (2a, 2b) being provided with said fixing means (5), namely:
- a first end (2a) provided with said first fixing means (51) suitable for being fixed on an upright (C3, C4) of the headlock barrier (C), and
- a second end (2b) provided with said second fixing means (52) suitable for being fixed on a longitudinal bar (C1, C2) of the headlock barrier (C),
said separator (1) being **characterized in that** the second fixing means (52) comprise two fixing zones (521) suitable for being fixed on the longitudinal bar (C1, C2) of the headlock barrier (C) on both sides of an upright (C3, C4).

2. Separator according to claim 1, **characterized in that** the second fixing means (52) comprise two flanges (521) suitable for being positioned around the longitudinal bar (C1, C2) of the headlock barrier (C) on both sides of the upright (C3, C4).

3. Separator according to anyone of the claims 1 or 2, **characterized in that** the first fixing means (51) are constituted by a fixing collar.

4. Separator according to anyone of the claims 1 to 3, **characterized in that** said two fixing zones (521) are constituted by two removable fixing zones (521).

5. Separator according to anyone of the claims 1 to 4, **characterized in that** the tubular member (2) is constituted of a tube made of metal or of plastic, its diameter being between 20 and 80 mm, preferably between 42 and 62 mm.

6. Separator according to anyone of the claims 1 to 5, **characterized in that** the ends (2a, 2b) of said tubular member (2) define a fixing axis (2'), and
said separator (1) comprises two convex portions (21) linked by a concave portion (23), namely:
- a lower convex portion (21) extending advantageously between the ends (2a, 2b) of the tubular member (2), its lengthwise extension being between 1100 and 1400 mm relative to the fixing axis (2), and
- an upper convex portion (22) extending away from the ends (2a, 2b) of the tubular member (2), defining with the fixing axis (2') an angle of 40° to 50°, and its lengthwise extension relative to the fixing axis (2') being smaller than the lengthwise extension of the lower convex portion (21).

7. Separator according to claim 6, **characterized in that** the essentially U-shaped upper convex portion (22) comprises two lateral arms (221) coupled by a junction arm (222) suitable for receiving an added longitudinal bar (6).

8. Separating system for feeding step in a livestock building, intended to be fixed on a headlock barrier (C) comprising two longitudinal bars (C1, C2) coupled by pairs of uprights (C3, C4), one of the uprights of said uprights being advantageously provided with an oscillating containment bar (C5),
said separating system comprising:
- several separators (1) according to anyone of claims 1 to 7,
and possibly
- an added longitudinal bar (6) intended to be fixed on said juxtaposed separators (1) and/or
- spraying means (7) for refreshment of the animals and advantageously carried by the added longitudinal bar (6).

9. Headlock barrier comprising two longitudinal bars (C1, C2) connected by pairs of uprights (C3, C4), one of the uprights of said pairs being advantageously provided with an oscillating containment bar (C5),
said headlock barrier (C) being provided with a separator system according to claim 8,
the separators (1) being advantageously mounted on the uprights (C3) provided with the oscillating containment bar (C5).

10. Headlock barrier (C) according to claim 9, **characterized in that**
- the first fixing means (51) with an upright (C3, C4) of said headlock barrier (C) are situated at the top and
- the second fixing means (52) with a longitudinal bar (C2) of said headlock barrier (C) are situated at the bottom,
or
- the first fixing means (51) with an upright (C3, C4) of said headlock barrier (C) are situated at the bottom and
- the second fixing means (52) with a longitudinal bar (C1) of the headlock barrier (C) are situated at the top.

11. Livestock building provided with a headlock barrier (C) according to anyone of the claims 9 or 10.
